# EUROPÄISCHE PATENTSCHRIFT

(11) **EP 3 144 495 B1**
(45) Veröffentlichungstag und Bekanntmachung des Hinweises auf die Patenterteilung: **09.10.2019**
(21) Anmeldenummer: 16176773.6
(22) Anmeldetag: 29.06.2016
(51) Int. Cl.: F01P 5/06, F01P 7/04, F01P 7/10, B60K 11/04, B62D 25/12

(54) **LANDWIRTSCHAFTLICHE ARBEITSMASCHINE**
AGRICULTURAL WORK MACHINE
ENGIN AGRICOLE

(30) Priorität: 17.09.2015 DE 102015115702
(43) Veröffentlichungstag der Anmeldung: 22.03.2017
(73) Patentinhaber: CLAAS Tractor S.A.S., 78141 Vélizy-Villacoublay Cedex (FR)
(72) Erfinder: Plumet, Julien, 92210 Saint Cloud (FR)
(74) Vertreter: CLAAS Gruppe

(56) Entgegenhaltungen:
- EP-A1- 2 787 190
- FR-A1- 2 942 504
- GB-A- 2 308 343
- US-A- 4 476 820
- US-A- 6 142 108
- US-A1- 2003 029 581

## Beschreibung

Die Erfindung betrifft eine landwirtschaftliche Arbeitsmaschine gemäß dem Oberbegriff des Anspruchs 1.

Landwirtschaftliche Arbeitsmaschinen, beispielsweise Traktoren, werden üblicherweise durch einen Antriebsmotor in Form einer Verbrennungskraftmaschine angetrieben, welche in einem im Wesentlichen geschlossenen Motorraum angeordnet ist. Der Antriebsmotor liefert dabei die Energie zum Vortrieb der Arbeitsmaschine und auch zum Antrieb von Nebenaggregaten der Arbeitsmaschine und angeschlossenen Arbeitsgeräten. Die bei einem Betrieb des Antriebsmotors auftretende Wärmeenergie wird bei wassergekühlten Antriebsmotoren von Kühlwasser aufgenommen und in einem Wärmetauscher, dem Kühler, an die Luft abgegeben, wobei zur Verbesserung der Kühlleistung üblicherweise ein Lüfter einen Luftstrom an dem Kühler erzeugt.

Um bei modernen landwirtschaftlichen Arbeitsmaschinen mit einer hohen Leistung eine hinreichende Kühlung gewährleisten zu können, werden üblicherweise leistungsstarke Kühler und entsprechend stark dimensionierte Lüfter eingesetzt. Die Luft zum Kühlen wird dabei üblicherweise durch den Lüfter frontseitig an der landwirtschaftlichen Arbeitsmaschine angesaugt und durch einen Kühler in den Motorraum geleitet. Aus dem Motorraum entweicht die Kühlluft gerichtet oder ungerichtet über Öffnungen in die Umgebung. Der Kühlluftstrom weist nach dem Durchqueren des Kühlers und des Motorraumes eine deutlich erhöhte Temperatur auf, wodurch Bauteile der Arbeitsmaschine, welche mit dem Abluftstrom in Berührung kommen, deutlich erwärmt oder erhitzt werden können. Es ist bekannt, dass derart erhitzt Luft, welche den Motorraum fahrerkabinenseitig verlässt, zu einer erheblichen Erhitzung der Fahrerkabine und einer Frontscheibe der Fahrerkabine führen kann. Zudem kann seitlich entweichende Luft Aufstiegshilfen zum Betreten der Fahrerkabine, beispielsweise Leitern oder Handgriffe, so stark erhitzen, dass dies für einen Bediener eine erhebliche Komforteinbuße darstellen kann.

Aus der EP 1 496 214 A1 ist ein geländegängiges Fahrzeug bekannt, bei dem zur Vermeidung einer unerwünschten Erhitzung von Fahrzeugbauteilen Kühlluft, welche frontseitig an einer Motorhaube angesaugt wird, an einer Oberseite der Motorhaube oberhalb des Antriebsmotors des Fahrzeuges aus dem Motorraum ausgeleitet wird. Dies ermöglicht einen besonders ungehinderten Luftstrom von dem Gebläse nach außen durch den Motorraum hindurch. Nachteilig ist hierbei jedoch, dass besonders bei der Fahrt des Fahrzeuges die erhitzte Luft gegen die Fahrerkabine geleitet wird. Zudem kann bei besonders niedrigen Außentemperaturen ein schnelles Erwärmen des Antriebsmotors innerhalb des Motorraumes erschwert werden, da die warme Luft bereits durch natürlich Konvektion aus dem Motorraum entweichen kann.

GB2308343 A offenbart eine Arbeitsmaschine, die für landwirtschaftliche Zwecke geeignet ist, gemäß dem Oberbegriff des Anspruchs 1.

Es ist daher die Aufgabe der vorliegenden Erfindung, eine landwirtschaftliche Arbeitsmaschine bereitzustellen, welche eine Regelung der Temperatur in dem Motorraum ermöglicht und eine unerwünschte Erhitzung von Antriebsmaschinenbauteilen reduziert. Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Die landwirtschaftliche Arbeitsmaschine weist einen Antriebsmotor, beispielsweise in Form einer Verbrennungskraftmaschine, auf, welche in einem im Wesentlichen geschlossenen Motorraum angeordnet ist. Der Antriebsmotor kann wassergekühlt sein, wobei eine Kühlung des Antriebsmotors über ein Kühlsystem erfolgt, wobei über Kühlwasser die von dem Antriebsmotor erzeugte Wärmeenergie von diesem abführt und über einen Kühler in Form eines Wärmetauschers an die Umgebung abgeben werden kann. Zur Verbesserung der Kühlleistung wird der Kühler durch einen Kühlluftstrom angeströmt, welcher durch einen Lüfter erzeugt wird. Die Kühlluft wird dabei durch Betriebsöffnungen angesaugt, welche frontseitig in der Motorraumverkleidung angeordnet sein können. Die Kühlluft wird nach dem Passieren des Kühlers in den Motorraum geleitet, wodurch eine zusätzliche Kühlung des Antriebsmotors und weiterer, in dem Motorraum angeordneter Zusatzaggregate erfolgen kann. Die Kühlluft wird bei dem Passieren des Kühlers und des Antriebsmotors erwärmt und kann als erwärmte Abluft den Motorraum gerichtet durch mindestens eine Abluftöffnung verlassen. Erfindungsgemäß ist der Abluftstrom durch die Abluftöffnung in Abhängigkeit von mindestens einem Betriebsparameter der Arbeitsmaschine regelbar.

In einer bevorzugten Ausgestaltung der Erfindung ist ein Betriebsparameter eine Umgebungstemperatur, eine Motorraumtemperatur, eine Fahrgeschwindigkeit der Arbeitsmaschine, oder eine Temperatur eines Betriebs- oder Hilfsstoffes. Ein Betriebsparameter der Arbeitsmaschine kann dabei neben der Motorraumtemperatur jeder Parameter sein, durch welchen eine Temperatur innerhalb des Motorraumes beeinflussbar ist, beispielsweise die Umgebungstemperatur oder eine Fahrgeschwindigkeit der Arbeitsmaschine. Zudem kann eine Temperatur eines Betriebsstoffes, Hilfsstoffes oder eines Zusatzaggregates als Betriebsparameter zur Regelung des Abluftstromes nutzbar sein. Dies bietet den Vorteil, dass die Regelung des Abluftstromes gezielt nutzbar ist, beispielsweise um die Temperatur eines Zusatzaggregates, wie einer Harnstoffeinspritzvorrichtung einer Abgasnachbehandlung, beschleunigt auf Betriebstemperatur zu bringen.

Erfindungsgemäß ist zur Regelung des Abluftstromes ein Querschnitt der mindestens einen Abluftöffnung veränderbar. Durch eine Änderung eines Querschnittes der Abluftöffnung ist eine konstruktiv einfache Maßnahme gegeben, um den Abluftstrom wirkungsvoll zu regeln. Eine Änderung des Querschnittes der Abluftöffnung kann dabei, insbesondere stufenlos, zwischen einer vollständigen Öffnung oder vollständigen Schließung des Querschnittes erfolgen, wodurch eine verbesserte Regelung des Abluftstromes ermöglicht werden kann.

Erfindungsgemäß ist zur Regelung des Abluftstromes ein Volumenstrom des Lüfters regelbar. Durch eine Regelung des Lüfters kann die Menge an Kühlluft, welche durch die Betriebsöffnung angesaugt und in den Motorraum geleitet wird, geregelt werden. Hierdurch ist indirekt auch die aus dem Motorraum austretende Luftmenge regelbar. So kann beispielsweise durch eine reduzierte Förderleistung des Lüfters die Menge an angesaugter Kühlluft reduziert werden, so dass auch die durch die Abluftöffnungen austretende Abluft reduziert wird. Erfindungsgemäß wird die Förderleistung des Lüfters, insbesondere vorübergehend, erhöht wird und gleichzeitig ein Querschnitt der Abluftöffnung reduziert, um eine möglichst gleichmäßige und zügige Erwärmung des Motorraumes durch den reduzierten Abfluss und ein Stauen der Abluft zu erreichen.

Erfindungsgemäß ist einer Abluftöffnung zur Regelung des Abluftstromes ein bewegliches Abdeckelement zugeordnet. Ein bewegliches Abdeckelement zur Veränderung eines Querschnittes einer Abluftöffnung kann jeweils einer einzelnen Abluftöffnung oder mehreren Abluftöffnungen zugeordnet sein. Ein Abdeckelement kann durch eine Kippbewegung, eine Schiebebewegung und/oder eine Schwenkbewegung verlagerbar ausgebildet sein, um durch die Verlagerung eine Veränderung des Querschnittes der jeweils zugeordneten Abluftöffnung zu bewirken. Ein Abdeckelement kann dabei einteilig oder mehrteilig ausgebildet sein, wobei ein mehrteiliges Abdeckelement beispielsweise lamellenartig ausgebildet sein kann. Eine Querschnittsveränderung der Abluftöffnung durch ein Abdeckelement stellt eine besonders einfache konstruktive Maßnahme dar, welche kostengünstig in die bestehende Motorraumverkleidung der landwirtschaftlichen Arbeitsmaschine integrierbar ist.

Vorteilhafterweise ist das Abdeckelement derart ausgebildet, dass der Abluftstrom durch das Abdeckelement lenkbar ist. Das Abdeckelement kann derart ausgeformt sein, dass durch das Abdeckelement in einem mindestens teilweise geöffneten Zustand der Abluftöffnung eine Leitwirkung auf den Abluftstrom ausübbar ist. Dies hat den Vorteil, dass der Abluftstrom gezielt von Bauteilen der Arbeitsmaschine, deren Erwärmung ungewünscht ist, abgeleitet werden kann. Dies können beispielsweise Teile der Fahrerkabine oder Handläufe sein, welche an Aufstiegshilfen wie Leitern der landwirtschaftlichen Arbeitsmaschine angeordnet sind.

In einer bevorzugten Ausgestaltung der Erfindung ist jeweils einem oder mehreren Abdeckelementen ein elektrisches, pneumatisches, hydraulisches und/oder thermomechanisches Stellglied zugeordnet. Ein Stellglied kann dabei jeweils einem einzelnen Abdeckelement oder mehreren Abdeckelementen zugeordnet sein. Besonders eine Zuordnung eines Stellgliedes zu mehreren Abdeckelementen ermöglicht eine kostengünstige Regelung des Abluftstromes, wohingegen eine Zuordnung von jeweils einem Stellglied zu einem Abdeckelement eine verbesserte gerichtete Regelung des Abluftstromes ermöglicht. Ein Stellglied kann beispielsweise mit einem elektrischen Bordnetz, einem pneumatischen oder hydraulischen System der Arbeitsmaschine verbunden sein. Darüber kann ein thermomechanisches Stellglied beispielsweise in Form eines Bimetalls ausgebildet sein. Ein thermomechanisches Stellglied, insbesondere in Form eines Bimetalls, hat den Vorteil, dass ein eigenständiges Reagieren auf Temperaturen durch das thermomechanische Stellglied erfolgen kann, so dass keine weiteren Anschlüsse an das Bordnetz der Arbeitsmaschine benötigt werden.

In einer besonders bevorzugten Ausgestaltung der Erfindung ist in dem Motorraum mindestens ein Temperatursensor angeordnet. Durch den mindestens einen Temperatursensor kann die Temperatur innerhalb des Motorraumes zuverlässig erfasst werden. Zudem kann der Temperatursensor in Form eines temperaturabhängigen Stellgliedes, beispielsweise eines thermomechanischen Stellglieds aus einem Bimetall, ausgebildet sein. Dies hat den Vorteil, dass eine von dem Bordsystem der Arbeitsmaschine unabhängige temperaturabhängige Regelung eines oder mehrerer Abdeckelemente erfolgen kann, wodurch eine zuverlässige Regelung des Abluftstromes gewährleistet werden kann.

Vorteilhafterweise weist die Motorraumverkleidung eine Motorhaube mit einer Oberseite und zwei einander gegenüberliegend angeordneten Seitenflächen auf, wobei mindestens eine Abluftöffnung in, insbesondere jeweils, einer Seitenfläche angeordnet ist. Dabei kann eine Abluftöffnung an einer einzigen oder beiden Seiten der Motorraumverkleidung vorgesehen sein. Mehrere Abluftöffnungen in einer oder beiden Seitenflächen können kiemenartig ausgebildet sein, wobei jeweils mehrere länglich ausgebildete Abluftöffnungen im Wesentlichen benachbart und parallel zueinander angeordnet sein können. Zudem ist denkbar, dass in der Oberseite der Motorraumverkleidung ebenfalls eine oder mehrere Abluftöffnungen angeordnet sein können. Die Motorraumverkleidung kann dabei ein- oder mehrteilig ausgebildet sein und eine Motorhaube umfassen. Die Abluftöffnungen können dabei in der Motorhaube angeordnet sein, wobei die Abluftöffnungen, insbesondere die kiemenförmig ausgebildeten Abluftöffnungen, beabstandet zur Fahrerkabine in der Motorraumverkleidung und/oder der Motorhaube ausgebildet sein können. Hierdurch kann ein unnötiges Erwärmen der Fahrerkabine durch den Abluftstrom, welcher durch die Abluftöffnungen austritt, vermieden werden.

Weiterhin ist vorzugsweise ein Steuersystem zum automatischen Regeln des Abluftstromes in Abhängigkeit mindestens eines Betriebsparameters vorgesehen, wobei das mindestens eine Abdeckelement und/oder der Lüfter durch das Steuersystem regelbar sind. Durch das Steuersystem kann eine kontinuierliche und automatische Steuerung und Regelung des Abluftstromes erfolgen. Das Steuersystem kann dabei mit mindestens einem Abdeckelement und/oder dem Lüfter verbunden sein und diese zur Regelung des Abluftstromes ansteuern. Hierdurch kann ein Zusammenwirken der Abdeckelemente und des Lüfters bei der Regelung des Abluftstromes bewirkt werden, wodurch beispielsweise die Regelung der Temperatur in dem Motorraum verbessert werden kann.

Nachfolgend wird die Erfindung unter Bezugnahme auf die anliegende Zeichnung näher erläutert.

Es zeigt:
- Fig. 1:: eine schematische Seitenansicht einer landwirtschaftlichen Arbeitsmaschine mit einem regelbaren Abluftstrom; und
- Fig. 2a-c:: eine schematische Seitenansicht einer Motorraumverkleidung mit Abluftöffnungen und daran angeordneten Abdeckelementen.

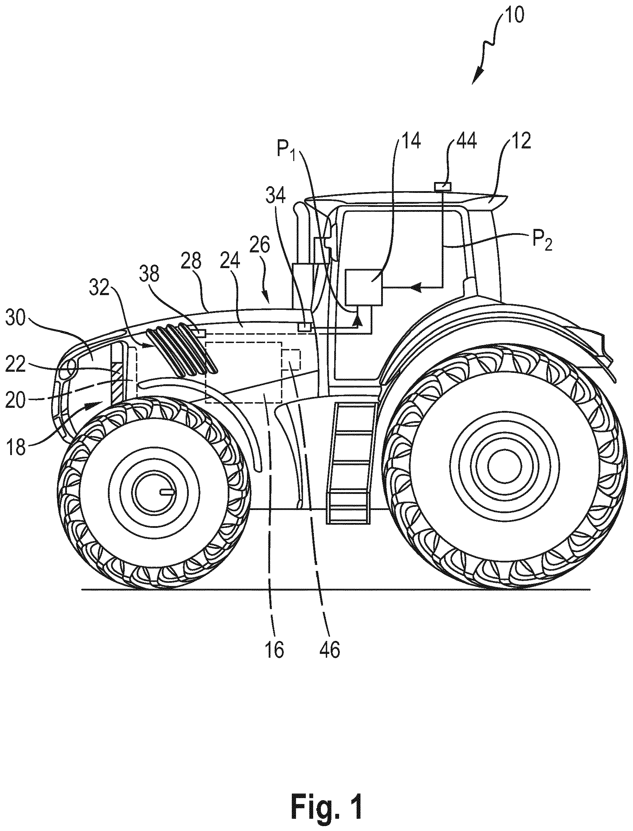

In Figur 1 ist eine landwirtschaftliche Arbeitsmaschine 10 in Form eines Traktors schematisch in einer Seitenansicht dargestellt, wobei der grundsätzliche Aufbau eines Traktors als dem Fachmann bekannt angesehen wird. Eine landwirtschaftliche Arbeitsmaschine 10 im Sinne der Erfindung kann jedes zur landwirtschaftlichen Arbeit einsetzbares Fahrzeug sein, wie ein Traktor, ein Frontlader, eine Baumaschine oder eine selbstfahrende Erntemaschine, wie ein Mähdrescher oder Feldhäcksler. Der Traktor weist zur Aufnahme eines Bedieners eine geschlossene Fahrerkabine 12 auf, wobei innerhalb der Fahrerkabine 12 üblicherweise ein Bedien- und Steuersystem 14 zur Bedienung und Steuerung der landwirtschaftlichen Arbeitsmaschine 10 sowie deren Komponenten angeordnet ist. Zum Antrieb und zur Bereitstellung der zum Betrieb der Arbeitsmaschine 10 benötigten Energie weist die landwirtschaftliche Arbeitsmaschine 10 einen Antriebsmotor 16 in Form eines Verbrennungsmotors auf. Zur Kühlung des Antriebsmotors 16 ist ein Kühlsystem 18 vorgesehen, welches zumindest einen Lüfter 20 und einen Kühler 22 zur Kühlung des Kühlwassers des Antriebsmotors 16 durch den von dem Lüfter 20 erzeugten Luftstrom umfasst.

Der Antriebsmotor 16 und das Kühlsystem 18 sind zusammen in einem Motorraum 24 angeordnet, wobei der Motorraum 24 durch eine Motorraumverkleidung 26 umschlossen ist. Die Motorraumverkleidung 26 kann neben einer Motorhaube 28 festlegbar Steckelemente (nicht dargestellt) aufweisen. Die Motorhaube 28 ist fahrerkabinenseitig verschwenkbar gelagert und ermöglicht dadurch in einem geöffneten Zustand einen verbesserten Zugang zu dem Motorraum 24 und insbesondere dem Antriebsmotor 16. Ein von dem Kühlsystem 18, insbesondere dem Lüfter 20, erzeugter Luftstrom wird durch den Motorraum 24 geleitet, so dass während eines normalen Betriebes der Arbeitsmaschine 10 eine Kühlung des Antriebsmotors 16 durch den Kühler 22 und durch den Luftstrom in dem Motorraum 26 erfolgen kann. Mit dem Kühlsystem 18 wirken Betriebsöffnungen 30 in der Motorraumverkleidung 26 zusammen, durch welche Kühlluft frontseitig durch die Motorraumverkleidung 26, insbesondere die Motorhaube 28, angesaugt werden kann. Nach einem Passieren des Kühlers 22 durch den Luftstrom wird der Luftstrom in den Motorraum 24 geleitet, wobei durch Überstreichen des Antriebsmotors 16 weitere Wärmeenergie aufgenommen werden kann, so dass der Luftstrom deutlich erwärmt als Abluftstrom durch seitlich in der Motorraumverkleidung 26, insbesondere der Motorhaube 28, angeordnete kiemenartig angeordnete Abluftöffnungen 32 aus dem Motorraum 24 in die Umgebung austreten kann. Die frontseitigen Betriebsöffnungen 30 in der Motorraumverkleidung 26 können großflächig ausgebildet sein und mit einem Gittereinsatz als Grobfilter gegen Verschmutzung versehen sein.

Eine Temperatur innerhalb des Motorraumes 24 kann durch mindestens einen Temperatursensor 34 erfasst werden, welcher beispielsweise mit dem Bedien- und Steuersystem 14 der landwirtschaftlichen Arbeitsmaschine 10 zur Anzeige der Temperatur und/oder einer temperaturabhängigen Steuerung verbunden ist.

Erfindungsgemäß ist der erwärmte Abluftstrom, welcher durch die Abluftöffnungen 32 aus dem Motorraum 24 austritt, in Abhängigkeit mindestens eines Betriebsparameters der landwirtschaftlichen Arbeitsmaschine regelbar. Ein Betriebsparameter kann dabei beispielsweise eine durch den Temperatursensor 34 gemessene Temperatur in dem Motorraum 24 sein. Eine Regelung des Abluftstromes, welcher aus dem Motorraum 24 austritt, kann durch eine Regelung der Förderleistung des Lüfters 20 und/oder durch eine Änderung eines Querschnittes der Abluftöffnung 32 erfolgen. Eine Querschnittsänderung einer Abluftöffnung 32 zur Regelung des Austretenden Abluftstromes kann beispielsweise durch ein der Abluftöffnung 32 zugeordnetes Abdeckelement 36 erfolgen.

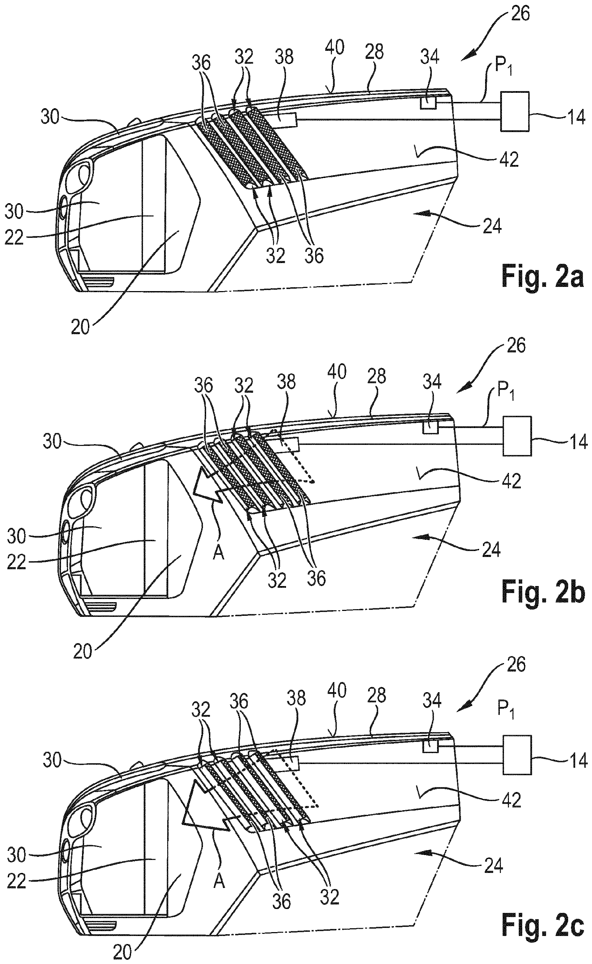

In der in Figur 2A dargestellten Motorraumverkleidung 26 in Form einer Motorhaube 28 ist jeder der Abluftöffnungen 32 ein Abdeckelement 36 zugeordnet. Die Abdeckelemente 36 können gemeinsam durch ein Stellglied 38 betätigt werden, wodurch eine Änderung des, insbesondere jeweiligen und/oder gesamten, Querschnitts der Abluftöffnungen 32 und damit eine Regelung des Abluftstromes erfolgen kann. Das Stellglied ist beispielsweise durch das Bedien- und Steuersystem 14 in Abhängigkeit von mindestens einem Betriebsparameter P der Arbeitsmaschine in eine geöffnete, geschlossene oder eine Zwischenposition verlagerbar. Denkbar ist auch, jedem Abdeckelement 32 ein einzelnes Stellglied 38 zuzuordnen. Die Abdeckelemente 36 sind in einer geschlossenen Position dargestellt, wodurch die Abluftöffnungen 32 geschlossen sind. Hierdurch kann die Kühlluft, welche durch den Lüfter 20 über die Betriebsöffnungen 30 in der Motorraumverkleidung 26 angesaugt wird, den Motorraum 24 zunächst nicht verlassen, sondern wird gestaut und sorgt für eine gleichmäßige Erwärmung innerhalb des Motorraumes 24. Dies ist besonders vorteilhaft bei sehr niedrigen Umgebungstemperaturen, so dass eine zügige Erwärmung des Motorraumes 24 und der darin angeordneten Komponenten, beispielsweise in Form eines Zusatzaggregats 46 wie eine Harnstoffeinspritzvorrichtung, ermöglicht werden kann.

Bei einer hinreichenden Erwärmung des Motorraumes 24 kann beispielsweise eine zumindest teilweise Öffnung der Abluftöffnungen 32 durch ein teilweises Verschwenken der Abdeckelemente 36 erfolgen (Figur 2B). Hierdurch kann ein Teil der erwärmten Abluft aus dem Motorraum 24 durch die Abluftöffnungen 32 in die Umgebung entweichen. Dies kann beispielsweise bei einem Betriebsparameter in Form einer niedrigen Umgebungstemperatur P₂ während der Fahrt des Traktors erfolgen, wodurch eine gewünschte Motorraumtemperatur P₁ einregelbar ist, ohne dass durch übermäßigen Austritt von erwärmter Abluft beispielsweise die Fahrerkabine 12 übermäßig erwärmt wird. Eine vollständige Öffnung der Abluftöffnungen 32 durch vollständig verschwenkte Abdeckelemente 36 ist in Figur 2C dargestellt. Hierbei kann zum Beispiel bei hohen Umgebungstemperaturen P₂ und/oder einer hohen Geschwindigkeit des Traktors mit einer entsprechend hohen anfallenden Wärmemenge, welche aus dem Motorraum 24 abgeführt werden muss, ein Abluftstrom im Wesentlichen ungehindert durch die Abluftöffnungen 32 in die Umgebung austreten. Hierbei kann eine größtmögliche Kühlwirkung erzielt werden und durch eine Richtung des Abluftstromes eine unerwünschte Erwärmung von Bauteilen der Arbeitsmaschine 10 vermieden werden.

### Bezugszeichenliste

- 10: landwirtschaftliche Arbeitsmaschine
- 12: Fahrerkabine
- 14: Bedien- und Steuersystem
- 16: Antriebsmotor
- 18: Kühlsystem
- 20: Lüfter
- 22: Kühler
- 24: Motorraum
- 26: Motorraumverkleidung
- 28: Motorhaube
- 30: Betriebsöffnung
- 32: Abluftöffnung
- 34: Temperatursensor
- 36: Abdeckelement
- 38: Stellglied
- 40: Oberseite
- 42: Seitenfläche
- 44: Umgebungstemperatursensor
- 46: Zusatzaggregat

- A: Abluftstrom
- P₁: erster Betriebsparameter
- P₂: zweiter Betriebsparameter

## Patentansprüche

1. Landwirtschaftliche Arbeitsmaschine mit einem in einem Motorraum (28) angeordneten Antriebsmotor (16), einer Motorraumverkleidung (26), einem Kühlsystem (18) mit einem Lüfter (20) zum Kühlen des Antriebsmotors (16), und mindestens einer in der Motorraumverkleidung (26) ausgebildeten Abluftöffnung (32) zum Ableiten eines Abluftstromes (A) aus dem Motorraum (28), wobei der Abluftstrom (A) in Abhängigkeit von mindestens einem Betriebsparameter (P) der Arbeitsmaschine (10) regelbar ist, wobei einer Abluftöffnung (32) zur Regelung des Abluftstromes (A) ein bewegliches Abdeckelement (36) zugeordnet ist, und ein Steuersystem (14) zum automatischen Regeln des Abluftstromes (A) in Abhängigkeit des mindestens einen Betriebsparameters (P) vorgesehen ist, **dadurch gekennzeichnet, dass** das mindestens eine Abdeckelement (36) und der Lüfter (20) durch das Steuersystem (14) derart geregelt werden, dass die Förderleistung des Lüfters (20), insbesondere vorübergehend, erhöht wird und gleichzeitig ein Querschnitt der Abluftöffnung (32) reduziert wird, um eine möglichst gleichmäßige und zügige Erwärmung des Motorraumes (28) durch den reduzierten Abfluss und ein Stauen der Abluft (A) zu erreichen.

2. Arbeitsmaschine nach Anspruch 1, **dadurch gekennzeichnet, dass** ein Betriebsparameter eine Umgebungstemperatur (P₂), eine Motorraumtemperatur (P₁), eine Fahrgeschwindigkeit der Arbeitsmaschine (10), oder eine Temperatur eines Betriebs- oder Hilfsstoffes ist.

3. Arbeitsmaschine nach Anspruch 1 oder 2, **dadurch gekennzeichnet, dass** zur Regelung des Abluftstromes (A) ein Querschnitt der mindestens einen Abluftöffnung (32) veränderbar ist.

4. Arbeitsmaschine nach einem der vorherigen Ansprüche, **dadurch gekennzeichnet, dass** zur Regelung des Abluftstromes (A) ein Volumenstrom des Lüfters (20) regelbar ist.

5. Arbeitsmaschine nach einem der vorherigen Ansprüche, **dadurch gekennzeichnet, dass** das Abdeckelement (36) derart ausgebildet ist, dass der Abluftstrom (A) durch das Abdeckelement (36) lenkbar ist.

6. Arbeitsmaschine nach einem der vorherigen Ansprüche, **dadurch gekennzeichnet, dass** jeweils einem oder mehreren Abdeckelementen (36) ein elektrisches, pneumatisches, hydraulisches und/oder thermomechanisches Stellglied (38) zugeordnet ist.

7. Arbeitsmaschine nach einem der vorherigen Ansprüche, **dadurch gekennzeichnet, dass** in dem Motorraum (24) mindestens ein Temperatursensor (34) angeordnet ist.

8. Arbeitsmaschine nach einem der vorherigen Ansprüche, **dadurch gekennzeichnet, dass** die Motorraumverkleidung (26) eine Motorhaube (28) mit einer Oberseite (40) und zwei einander gegenüberliegend angeordneten Seitenflächen (42) aufweist, wobei mindestens eine Abluftöffnung (32) in, insbesondere jeweils, einer Seitenfläche (42) angeordnet ist.

## Claims

1. An agricultural working machine with a propulsion engine (16) disposed in an engine compartment (28), an engine compartment cover (26), a cooling system (18) with a cooling fan (20) for cooling the propulsion engine (16), and at least one exhaust air outlet (32) arranged in the engine compartment cover (26) for carrying a stream of exhaust air (A) away from the engine compartment (28),
wherein
the stream of exhaust air (A) can be adjusted as a function of at least one operating parameter (P) of the working machine (10), wherein a movable cover element (36) is associated with an exhaust air outlet (32) in order to adjust the stream of exhaust air (A), and a control system (14) is provided for automatic adjustment of the stream of exhaust air (A) as a function of the at least one operating parameter (P), **characterized in that** the at least one cover element (36) and the cooling fan (20) can be adjusted by the control system (14) in a manner such that the output of the cooling fan (20) is increased, in particular temporarily, and at the same time a cross section of the exhaust air outlet (32) is reduced in order to heat the engine compartment (28) as uniformly and rapidly as possible by means of the reduced outflow and to dam up the exhaust air (A).

2. The worki ng machine accordi ng to claim 1, **characterized in that** an operati ng parameter is an environmental temperature (P₂), an engine compartment temperature (P₁), a travelling speed of the working machine (10) or a temperature of a fuel or auxiliary material.

3. The working machine according to claim 1 or claim 2, **characterized in that** a cross section of the at least one exhaust air outlet (32) can be varied in order to adjust the stream of exhaust air (A).

4. The working machine according to one of the preceding claims, **characterized in that** a volume flow of the cooling fan (20) can be adjusted in order to adjust the stream of exhaust air (A).

5. The working machine according to one of the preceding claims, **characterized in that** the cover element (36) is configured in a manner such that the stream of exhaust air (A) can be steered via the cover element (36).

6. The working machine according to one of the preceding claims, **characterized in that** an electrical, pneumatic, hydraulic and/or thermomechanical actuator(38) is associated with each of the one or more cover elements (36).

7. The working machine according to one of the preceding claims, **characterized in that** at least one temperature sensor (34) is disposed in the engi ne compartment (24).

8. The working machine according to one of the preceding claims, **characterized in that** the engine compartment cover (26) comprises an engi ne cowling (28) with a top face (40) and two lateral faces (42) which are disposed opposite to each other, wherein at least one exhaust air outlet (32) is disposed in one, and in particular in each, side face (42).

## Revendications

1. Machine de travail agricole comprenant un moteur d'entraînement (16) disposé dans un compartiment-moteur (28), une garniture de compartiment-moteur (26), un système de refroidissement (18) avec un ventilateur (20) pour refroidir le moteur d'entraînement (16), et au moins une ouverture de sortie d'air (32) ménagée dans la garniture de compartiment-moteur (26) pour évacuer un flux d'air sortant (A) hors du compartiment-moteur (28), le flux d'air sortant (A) étant régulable en fonction d'au moins un paramètre de fonctionnement (P) de la machine de travail (10), à une ouverture de sortie d'air (32) étant associé un élément de recouvrement mobile (36) pour réguler le flux d'air sortant (A), et un système de commande (14) étant prévu pour réguler automatiquement le flux d'air sortant (A) en fonction du au moins un paramètre de fonctionnement (P), **caractérisée en ce que** le au moins un élément de recouvrement (36) et le ventilateur (20) sont régulés par le système de commande (14) de façon que le débit du ventilateur (20) soit augmenté, en particulier passagèrement, et qu'une section transversale de l'ouverture de sortie d'air (32) soit simultanément réduite afin d'obtenir un réchauffement aussi uniforme et continu que possible du compartiment-moteur (28) par l'intermédiaire d'un flux de sortie réduit et d'une stagnation de l'air sortant (A).

2. Machine de travail selon la revendication 1, **caractérisée en ce qu'**un paramètre de fonctionnement est une température ambiante (P₂), une température de compartiment-moteur (P₁), une vitesse de marche de la machine de travail (10) ou une température d'une matière consommable ou auxiliaire.

3. Machine de travail selon la revendication 1 ou 2, **caractérisée en ce que**, pour la régulation du flux d'air sortant (A), une section transversale de la au moins une ouverture de sortie d'air (32) est modifiable.

4. Machine de travail selon une des revendications précédentes, **caractérisée en ce que**, pour la régulation du flux d'air sortant (A), un flux volumique du ventilateur (20) est régulable.

5. Machine de travail selon une des revendications précédentes, **caractérisée en ce que** l'élément de recouvrement (36) est conçu de façon que le flux d'air sortant (A) soit orientable par l'intermédiaire de l'élément de recouvrement (36) .

6. Machine de travail selon une des revendications précédentes, **caractérisée en ce qu'**à un ou à plusieurs éléments de recouvrement (36) est associé un actionneur électrique, pneumatique, hydraulique et/ou thermomécanique (38).

7. Machine de travail selon une des revendications précédentes, **caractérisée en ce que** dans le compartiment-moteur (24) est disposé au moins un capteur de température (34).

8. Machine de travail selon une des revendications précédentes, **caractérisée en ce que** la garniture de compartiment-moteur (26) comporte un capot-moteur (28) avec un dessus (40) et deux surfaces latérales (42) disposées en vis-à-vis l'une de l'autre, au moins une ouverture de sortie d'air (32) étant ménagée dans une surface latérale (42), en particulier dans chacune d'elles.
